# EUROPEAN PATENT APPLICATION

(11) **EP 4 626 079 A1**
(43) Date of publication of application: **01.10.2025**
(21) Application number: 24813898.4
(22) Date of filing: 07.04.2024
(51) Int. Cl.: H04W 48/04

(54) **ACCESS METHOD, COMMUNICATION APPARATUS, AND STORAGE MEDIUM**

(30) Priority: 29.05.2023 CN 202310620517
(71) Applicant: ZTE Corporation, Shenzhen, Guangdong 518057 (CN)
(72) Inventor: CHEN, Junjiang, Shenzhen, Guangdong 518057 (CN); LI, Jun, Shenzhen, Guangdong 518057 (CN); PENG, Hong, Shenzhen, Guangdong 518057 (CN); GUO, Chengfeng, Shenzhen, Guangdong 518057 (CN); LIU, Zhilong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/086331
(87) International publication number: WO 2024/244692

(57) **Abstract**

Provided are an access method, a communication apparatus, and a storage medium. The access method comprises: first, receiving an access request from a client, the access request being used for requesting to access an audio and video system, and the access request comprising the position information and service type of the client; then, according to the position information and the service type, determining at least two target access nodes from a plurality of access nodes of the audio and video system; sending the information of the at least two target access nodes to the client, allowing the client to determine a target transmission strategy in accordance with the link quality of the at least two target access nodes; the link quality of the target access nodes being used to represent the quality of a link between a target access node and the client; and controlling the target access node indicated by the target transmission strategy to perform data transmission with the client.

## Description

The present disclosure claims a priority to Chinese Patent Application No. 202310620517.X, filed on May 29, 2023, which is hereby incorporated by reference in its entirety.

### TECHNICAL FIELD

The present disclosure relates to the technical field of audio and video communications, and in particular, to an access method, a communication apparatus, and a storage medium.

### BACKGROUND

With the popularization of mobile Internet and the commercialization of the 5th generation mobile communication technology (5G), requirements of a user for low-latency and high-reliability audio and video applications are increasingly growing. Currently, Real-Time Communication (RTC), relying on long-term technological accumulation in the video service field, provides industries with all-scenario, all-interactive, and all-real-time audio and video services that are characterized by high concurrency, low latency, high-definition smoothness, security, and reliability. These services are suitable for various application scenarios such as online education, cloud conferencing, social entertainment, etc.

### SUMMARY

In an aspect, there is provided an access method, which is applied to a control node of an audio and video system. The access method includes:
receiving an access request from a client, where the access request is used to request to access the audio and video system, and the access request includes location information and a service type of the client;
determining at least two target access nodes from a plurality of access nodes of the audio and video system according to the location information and the service type;
sending information of the at least two target access nodes to the client, so as to make the client determine a target transmission strategy according to link qualities of the at least two target access nodes, where a link quality of a target access node is used to characterize a quality of a link between the target access node and the client; and
controlling a target access node indicated by the target transmission strategy to perform data transmission with the client.

In another aspect, there is provided an access method, which is applied to a client. The access method includes:
sending an access request, where the access request is used to request to access an audio and video system, and the access request includes location information and a service type of the client;
receiving information of at least two target access nodes sent from the audio and video system;
determining a target transmission strategy according to link qualities of the at least two target access nodes, where a link quality of a target access node is used to characterize a quality of a link between the target access node and the client; and
performing data transmission with the audio and video system based on the target transmission strategy.

In yet another aspect, there is provided a communication apparatus, which is applied to a control node of an audio and video system. The communication apparatus includes: a receiving module and a processing module:
the receiving module is configured to receive an access request from a client, where the access request is used to request to access the audio and video system, and the access request includes location information and a service type of the client;
the processing module is configured to determine at least two target access nodes from a plurality of access nodes of the audio and video system according to the location information and the service type;
the processing module is further configured to send information of the at least two target access nodes to the client, so as to make the client determine a target transmission strategy according to link qualities of the at least two target access nodes, where a link quality of a target access node is used to characterize a quality of a link between the target access node and the client; and
the processing module is further configured to control a target access node indicated by the target transmission strategy to perform data transmission with the client.

In yet another aspect, there is provided a communication apparatus, which is applied to a client. The communication apparatus includes: a transceiving module and a processing module:
the transceiving module is configured to send an access request, where the access request is used to request to access an audio and video system, and the access request includes location information and a service type of the client;
the transceiving module is further configured to receive information of at least two target access nodes sent from the audio and video system;
the processing module is configured to determine a target transmission strategy according to link qualities of the at least two target access nodes, where a link quality of a target access node is used to characterize a quality of a link between the target access node and the client;
the transceiving module is further configured to perform data transmission with the audio and video system based on the target transmission strategy.

In yet another aspect, there is provided a communication apparatus. The communication apparatus includes: a processor and a memory; where the memory stores instructions executable by the processor; in response that the processor is configured to execute the instructions, the communication apparatus is enabled to implement the method according to any one of above-mentioned aspects.

In yet another aspect, there is provided a computer-readable storage medium. The computer-readable storage medium stores computer instructions that, upon being run on a computer, enable the computer to execute the method according to any one of above-mentioned aspects.

In yet another aspect, there is provided a computer program product including computer instructions. In response that the computer instructions are run on a computer, the computer is enabled to execute the method according to any one of above-mentioned aspects.

### BRIEF DESCRIPTION OF THE DRAWINGS

The accompanying drawings are used to provide a further understanding of the technical solutions of the present disclosure, and constitute a part of the specification. The accompanying drawings are used to explain the technical solutions of the present disclosure together with the embodiments of the present disclosure, and do not constitute a limitation on the technical solutions of the present disclosure.
FIG. 1 is a schematic diagram of an architecture of an audio and video system according to some embodiments of the present disclosure.
FIG. 2 is a method flowchart of an access method according to some embodiments of the present disclosure.
FIG. 3 is a method flowchart of another access method according to some embodiments of the present disclosure.
FIG. 4 is a schematic diagram of a network topology according to some embodiments of the present disclosure.
FIG. 5 is a logic block diagram of a procedure of an access method according to some embodiments of the present disclosure.
FIG. 6 is a schematic diagram of a transmission strategy according to some embodiments of the present disclosure.
FIG. 7 is a method flowchart of yet another access method according to some embodiments of the present disclosure.
FIG. 8 is a schematic diagram of a composition of an access apparatus according to some embodiments of the present disclosure.
FIG. 9 is a schematic diagram of a composition of another access apparatus according to some embodiments of the present disclosure.
FIG. 10 is a schematic diagram of a structure of an access apparatus according to some embodiments of the present disclosure.

### DETAILED DESCRIPTION

In order to enable those skilled in the art to better understand the technical solutions in the present disclosure, the technical solutions in the embodiments of the present disclosure will be described clearly and completely in conjunction with the accompanying drawings. Obviously, the described embodiments are merely a part of embodiments of the present disclosure, but not all of the embodiments of the present disclosure. All other embodiments obtained based on the embodiments of the present disclosure by an ordinary person of those skilled in the art without paying any creative effort shall be included in the protection scope of the present disclosure.

In the description of the present disclosure, unless otherwise specified, "/" means an "or" relationship, for example, "A/B" may represent A or B. "And/or" in the present disclosure is just an association relationship that describes relevant objects, indicating that three relationships may exist. For example, A and/or B may mean these three situations: A exists alone; A and B exist simultaneously; or B exists alone. **In** addition, "at least one" means one or more, and "plurality" means two or more. The words, such as "first" and "second" do not limit a quantity or an execution order, and the words such as "first" and "second" do not limit that object are different, either.

It should be noted that in the present disclosure, wordings, such as "exemplarily" or "for example" and variations thereof are used to indicate examples, illustrations, or clarifications. Any embodiment or design solution described in the present disclosure as "exemplarily" or "for example" should not be illustrated as being more preferred or advantageous over other embodiments or design solutions. Specifically, the usage of wordings such as "exemplarily" or "for example" is intended to present relevant concepts in a concrete way.

A communication link between a client and an access node of a real-time audio and video network (i.e., Real Time Network (RTN)) may be referred to a last mile. A last mile access refers to a technology in which the RTN system schedules and allocates an access node for the client to access the RTN. This technology is mainly used to transmit service data of the client to the access node with high reliability, so as to enable service applications to access the RTN system.

However, scheduling based on current last mile access technology is not accurate, and data transmission reliability is relatively low. Currently, a geographical position-based approach is usually adopted, in which an access node with a closest physical distance to an IP address of the client is allocated to the client according to the IP address information of the client. It has limitations on only being based on a physical distance, which cannot be applicable for various types of service requirements. In addition, the determined last mile link may suffer from instability or a situation of weak network environment, thereby affecting the reliability of service data transmission between the client and the audio and video system.

In view of this, an access method applied to a control node of an audio and video system is provided in the embodiments of the present disclosure, and the method includes: receiving an access request from a client, and determining at least two target access nodes from a plurality of access nodes of the audio and video system according to location information and the service type indicated by the access request. Furthermore, the audio and video system may send information of the determined at least two target access nodes to the client, so as to make the client determine a target transmission strategy based on link qualities of the at least two target access nodes. A link quality of a target access node is used to characterize a quality of a link (i.e., the last mile mentioned above) between the target access node and the client, and perform data transmission with the client based on the target transmission strategy. In this way, the access node may be determined more accurately based on the location information and service type of the client, so as to implement precise scheduling of client access by the audio and video system. In addition, the client selecting an appropriate transmission strategy based on the link quality of the access node to transmit data with the audio and video system may further improve the reliability of service data transmission.

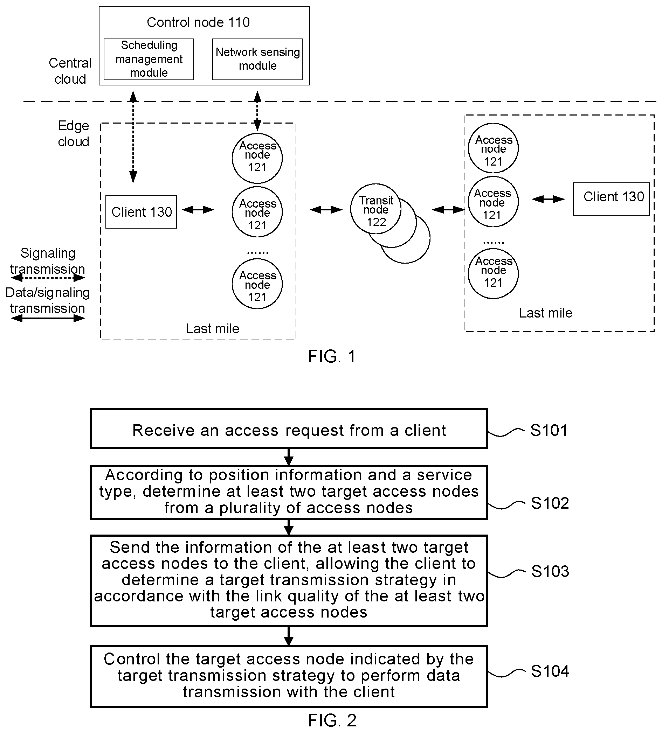

FIG. 1 is an architecture of an audio and video system provided in the embodiments of the present disclosure. As shown in FIG. 1, the audio and video system may include a control node 110 and a media node, where the media node is configured to support access and forwarding of audio and video data. The media node includes an access node 121 and a transit node 122. In some embodiments, the audio and video system may further include a client 130 corresponding to the access node 121.

In some embodiments, the audio and video system may include an audio and video cloud network, which may be used to implement distributed deployment of infrastructure resources of edge computing, and perform unified management on these resources. Deployment sites with relatively more resources and with concentrated locations are called central clouds, and deployment sites with relatively fewer resources and with widely distributed locations are called edge clouds (also called edge cloud nodes). Since edge clouds are widely distributed, the edge clouds are closer to a terminal device used by a user. That is, an edge cloud may be understood as a cloud computing platform close to the terminal device, and a central cloud may be understood as a cloud platform that uniformly manage a plurality of edge clouds.

The control node 110 is deployed on the above-mentioned central cloud, is responsible for controlling and managing a media node, and is able to receive and process node information and link quality information reported by the media node. In some embodiments, the control node 110 may include a network sensing module and an access scheduling module. The network sensing module is able to harvest edge data and configure a network topology, and the access scheduling module is able to maintain access quantization network topology corresponding to various services and preferentially schedule a corresponding access node. In addition, the control node 110 may further be configured to perform routing forwarding path calculation, plan an optimal routing forwarding path, intelligently forward data, and manage classified data.

The access node 121 is also referred to as an edge node, and is deployed on an above-mentioned edge cloud. The access node 121 may be composed of a plurality of small nodes, which are widely distributed and are a kind of nodes physically closest to the client 130. A function of an access node 121 is accessing the client in close and preferentially, and reporting its own node information to the control node 110. In some embodiments, a link between client 130 and the access node 121 is usually referred to as a last mile link.

A range of transit nodes 122 covers all large areas, and a connection relationship between various access nodes 121 or transit nodes 122 is similar to a full connection, which is a many-to-many mesh structure. A range of a transit node 122 may include a plurality of access nodes 121. A function of a transit node 122 is forwarding data quickly and with high quality, and reporting link quality information between nodes to the control node 110.

In some embodiments, the client 130 may be various physical devices or software applications that support generation, transmission, and display of data such as audio, video, etc. For example, the client 130 may be a mobile phone application, a software development kit (SDK), or a terminal device (e.g., a phone, a tablet, a desktop, laptop, handheld computer, a notebook, an ultra-mobile personal computer (UMPC), a netbook, as well as a cellular phone, personal digital assistant (PDA), augmented reality (AR)/virtual reality (VR) device, etc.).

It could be understood that, the system architecture shown in FIG. 1 does not constitute a limitation on the embodiments of the present disclosure, and may include more or fewer components than those illustrated, or combine certain components, or have different component arrangements.

The method provided in the present disclosure may be illustrated below in detail in combination with the accompanying drawings of the specification.

As shown in FIG. 2, an access method is provided in the embodiments of the present disclosure, which is applied to a control node in an audio and video system. The method includes the following S101-S104.

In S101, an access request is received from a client.

The access request is used to request to access the audio and video system, and the access request includes location information and a service type of the client.

In some embodiments, the location information of the client includes network address information. Exemplarily, the network address information of the client may be an Internet Protocol (IP) address of the client.

In addition, the location information of the client may also include geographical location information. Exemplarily, the geographical location information of the client may be information of a region where the client is located, such as Shanghai, Beijing, etc. In some embodiments, the network address information of the client is acquired based on the access request, and the geographical location information of the client may further be acquired through the network address information.

In some embodiments, services of the client may include a cloud computer, an interactive whiteboard, a video conferencing, an Internet of Things (IoT) video, interactive live streaming, Extended Reality (XR), and other possible services.

In some embodiments, a service type of a service may be determined based on a service requirement of the service.

Exemplarily, a service with a highest priority for a requirement on latency may be determined as a first service type (also referred to as a service with a type of latency priority requirement). For example, services such as a cloud computer and an interactive whiteboard have extremely low tolerance for latency, and may tolerate minor packet loss.

Alternatively, a service with a highest priority for a requirement on packet loss rate may be determined as a second service type (also referred to as a service with a type of packet loss rate priority requirement). For example, compressed data file transmission prioritizes a packet loss rate requirement over latency or other requirements. In addition, other possible service types such as bandwidth, etc., may further be included in the embodiments of the present disclosure, which are not listed herein.

In some embodiments, the control node in the audio and video system may periodically perform network sensing with a preset frequency, and record and timely update the obtained network sensing data. Before performing the above-mentioned S101, the control node may perform network sensing, and then the control node may perform access scheduling for the client based on the acquired network sensing data.

In some embodiments, the above-mentioned network sensing may be implemented by way of a timing task. The control node may analyze a network topology between an access node and a transit node through a network sensing module, and initiate a network detection request to various access nodes, thus driving the access nodes to periodically perform network detection on connected transit nodes based on the above-mentioned preset frequency, so as to acquire detection data such as packet loss rate, latency, jitter, and a used bandwidth of an inter-node link.

In some embodiments, the control node may further record inherent data (e.g., a node IP address, a node identity document (ID), node hardware parameters (e.g., CPU or memory, etc.), client access information, etc.) of various nodes. Alternatively, the control node may further record historical data (e.g., a historical login success rate of the client, a historical service state of the client (such as a freeze rate, a latency, etc.)) of various nodes.

Therefore, the above-mentioned network sensing data may include detection data, inherent data and historical data reported by various nodes.

Exemplarily, the control node may initiate a data harvesting request to an access node at a time granularity not less than that of the above-mentioned network detection performed periodically; in response to the data harvesting request, the access node reports the detection data, the inherent data, the historical data and other data.

In some embodiments, after the control node performs network sensing to acquire the above-mentioned detection data, inherent data, historical data and other data, the control node may perform exception processing on the received data, such as detecting whether the data is returned in a standard format, whether the data is out of bounds, etc., so as to determine whether the data is abnormal, and process data detected to be abnormal.

In some embodiments, when the network topology of the audio and video system changes (such as situations that a node is added or deleted, or connected edges are added or deleted occur), the control node may again perform network sensing based on a real-time network topology. For example, the control node may initiate a new network detection request and a new data harvesting request to various access nodes, so as to acquire new network sensing data.

In S102, at least two target access nodes are determined from a plurality of access nodes according to the location information and the service type.

The above-mentioned plurality of access nodes are all or a portion of the access nodes in the audio and video system. The above-mentioned target access node is an access node determined by the control node to be suitable for the client to access, and may also be understood as an optimal access node for the client.

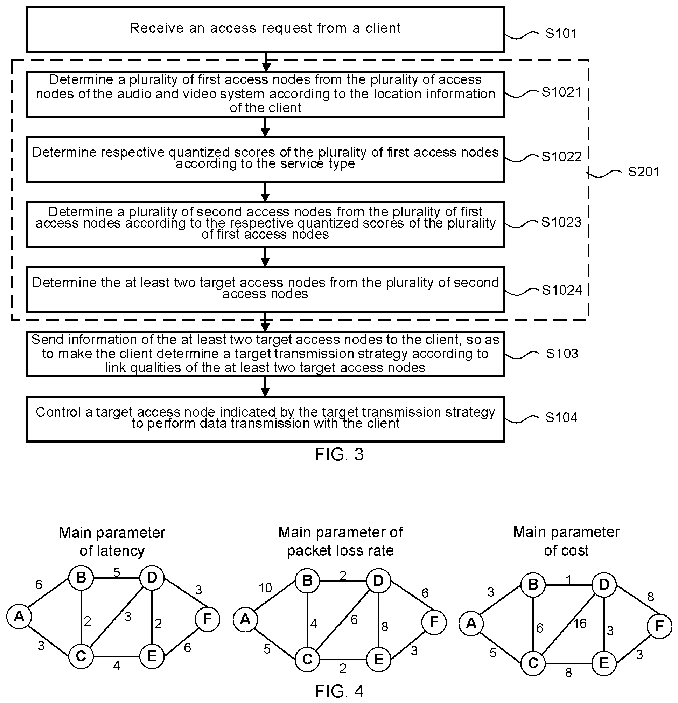

In some embodiments, as shown in FIG. 3, the process where the control node determines the at least two target access nodes from the plurality of access nodes according to the location information and the service type may be implemented as the following S1021-S1024.

In S1021, a plurality of first access nodes are determined from the plurality of access nodes of the audio and video system according to the location information of the client.

A first access node is an access node whose distance from the client is shorter than or equal to a preset distance threshold.

In some embodiments, the control node may determine distances between respective access nodes and the client according to the location information of the client and location information of various nodes (e.g., IP addresses of the access nodes) acquired in the above-mentioned network sensing process. Furthermore, an access node whose distance is shorter than or equal to the preset distance threshold is determined as the first access node.

Exemplarily, the above-mentioned preset distance threshold may be pre-set in the audio and video system, or may be set by the control node of the audio and video system based on the determined distances between various access nodes and the client.

It should be noted that, upon a distance between an access node and the client is shorter than or equal to the preset distance threshold, it means that a physical distance between the node and the client is relatively short. The control node may define a distance range by setting the preset distance threshold, and screen out the plurality of first access nodes within the distance range, i.e., a plurality of first access nodes closest to the client. Therefore, the above-mentioned first access nodes are access nodes that are suitable for the client to access in a physical distance.

In S1022, respective quantized scores of the plurality of first access nodes are determined according to the service type.

A quantized score is used to characterize a reliability of a link between a first access node and a transit node of the audio and video system for transmitting service data of the service type.

As an example, the quantized score may be negatively correlated with the reliability. That is, the smaller the quantized score of the first access node is, the higher the reliability of the link between the first access node and the transit node of the video system for transmitting service data of the service type is. On the contrary, the larger the quantized score of the first access node is, the lower the reliability of the link between the first access node and the transit node of the video system for transmitting service data of the service type is.

As another example, the quantized score may be positively correlated with reliability.

It should be understood that, the relationship between the quantized score and the reliability mainly depends on a determination algorithm of the quantized score. The following mainly uses the quantized score being negatively correlated with the reliability as an example to perform illustration.

In some embodiments, the control node may determine the quantized score of the first access node based on a service requirement corresponding to the service type. Exemplarily, if the service type of the client is the above-mentioned first service type, the control node may perform quantization based on a latency parameter of the link between the first access node and the transit node of the audio and video system, so as to determine the quantized score of the first access node.

In some embodiments, the control node may acquire a quantized network topology of the audio and video system corresponding to the service type based on the service type. The quantized network topology is used to indicate first access nodes in the audio and video system and links between the first access nodes and transit nodes in the audio and video system, where the links indicated by the quantized network topology have quantized scores.

Exemplarily, the control node may determine a main quantized parameter for quantization based on a service requirement corresponding to the service type, and determine the above-mentioned quantized network topology based on the main quantized parameter and the network topology of the audio and video system.

FIG. 4 shows a quantized network topology taking latency, packet loss rate and cost as main parameters. As shown in FIG. 4, the quantized network topology includes a node A, a node B, a node C, ..., and a node F. Taking the quantized network topology which takes the latency as the main parameter as an example, a quantized score of a link A-B between node A and node B is 6, a quantized score of a link A-C is 3, a quantized score of a link B-D is 5, a quantized score of a link B-C is 2, a quantized score of a link C-E is 4, a quantized score of a link C-D is 3, a quantized score of a link D-E is 2, a quantized score of a link D-F is 3, and a quantized score of a link E-F is 6.

In addition, a minimum quantized score among a plurality of links between first access nodes and a plurality of transit nodes may be determined as a quantized score of the first access node. Exemplarily, if the node A is a first access node, the quantized score 3 of the link A-C is less than the quantized score 6 of the link A-B, and the quantized score 3 of the link A-C may be taken as the quantized score of the first access node.

In an implementation, the control node may determine quantized network topologies corresponding to a plurality of possible service types in a preset way, and then determine a quantized network topology corresponding to the service type from the plurality of quantized network topologies based on the service type of the client, and acquire the quantized scores of respective first access nodes in the quantized network topology.

In another implementation, when the control node determines the service type of the client, the control node may determine the quantized network topology based on the service requirement corresponding to the service type and the network topology of the audio and video system, and acquire the quantized scores of respective first access nodes in the quantized network topology.

In S1023, a plurality of second access nodes are determined from the plurality of first access nodes according to the respective quantized scores of the plurality of first access nodes.

In an implementation, the control node may perform averaging calculation on the respective quantized scores of the plurality of first access nodes to obtain an average quantized score. Then, first access nodes whose quantized score are less than or equal to the average quantized score is determined as the second access nodes.

In another implementation, the control node may further sort the first access nodes based on the respective quantized scores of the plurality of first access nodes, and then select N first access nodes with relatively smaller quantized scores as the second access nodes based on a sorting result. N is a positive integer greater than or equal to 2.

In S1024, the at least two target access nodes are determined from the plurality of second access nodes.

In some embodiments, the control node may determine the at least two target access nodes from the plurality of second access nodes.

Exemplarily, the control node may further determine the at least two target access nodes from the plurality of second access nodes based on distances and quantized scores between respective second access nodes and the client.

In some embodiments, the control node may determine the at least two target access nodes from the plurality of second access nodes based on historical access information of the client to access the audio and video system. The historical access information includes a historical login success rate and a historical service state parameter of the client to access the audio and video system based on the access node. Exemplarily, the control node may determine the historical access information from historical data obtained by performing the above-mentioned network sensing.

It should be noted that, in a case where a user at the client's location has previously accessed the audio and video system, the control node acquires the historical access information, and determines the at least two target access nodes from the plurality of second access nodes, thereby further improving the accuracy of access node scheduling by combining the historical access information. On the contrary, in a case where no user has ever accessed the audio and video system at the client's location and there is no historical access information, the control node may directly determine the at least two target access nodes from the plurality of second access nodes.

For example, the control node acquires the historical access information of the client to access the audio and video system, and determines white-list access nodes from the plurality of second access nodes according to the historical access information. Then, target access nodes are determined from the white-list access nodes.

Exemplarily, the control node may determine whether a second access node is a white-list access node or a black-list access node according to information (such as a historical login success rate, a historical service state of the client, etc.).

For example, the control node may pre-determine a historical login success rate threshold and a historical service state threshold, and determine an access node whose historical login success rate is less than or equal to the historical login success rate threshold as a black-list access node. In addition, an access node whose historical service state is less than or equal to the historical service state threshold may be determined as a black-list access node. The remaining nodes that meet requirements of the historical login success rate threshold and the historical service state threshold are white-list access nodes.

Therefore, a historical login success rate or a historical service state of a black-list access node is relatively poor, and its link quality is lower than that of a white-list access node. That is, the white-list access node represents a link with better quality from the client's location to the access node, which may be preferentially allocated, expanded and upgraded.

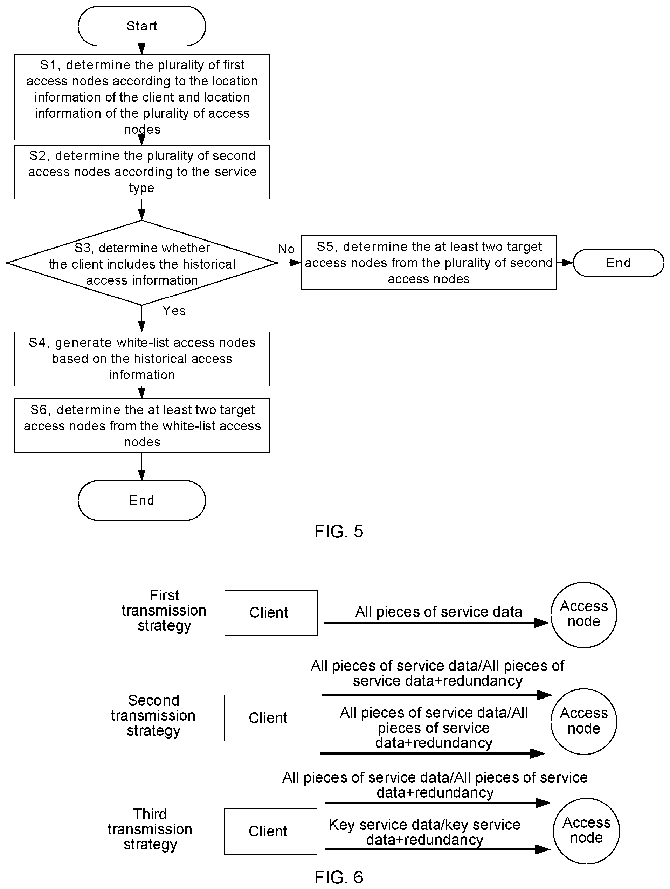

In some embodiments, the process of determining the at least two target access nodes in S102 may further be represented by the logic block diagram shown in FIG. 5. As shown in FIG. 5, the control node may perform the following S1-S6.

In S1, the plurality of first access nodes are determined according to the location information of the client and location information of the plurality of access nodes.

In S2, the plurality of second access nodes are determined according to the service type.

In S3, whether the client includes the historical access information is determined.

If yes, the following S4 is performed.

If not, the following S5 is performed.

In S4, white-list access nodes are generated based on the historical access information.

In S5, the at least two target access nodes are determined from the plurality of second access nodes.

In S6, the at least two target access nodes are determined from the white-list access nodes.

In S103, information of the at least two target access nodes is sent to the client, so as to make the client determine a target transmission strategy according to link qualities of the at least two target access nodes.

A link quality of a target access node is used to characterize a quality of a link between the target access node and the client. Information of a target access node may include inherent data of the target access node, such as one or more of a node IP address, a node identity document, a node hardware parameter (e.g., CPU or memory, etc.), and client access information.

In some embodiments, the control node may set quality levels, such as a first link level, a second link level, and a third link level. Exemplarily, a link of the first link level may also be referred to as an excellent link, a link of the second link level may also be referred to as a good link, and a link of the third link level may also be referred to as a poor link. Of course, classification for the above-mentioned link levels is only an example, and the classification for the link levels may also include other possible forms.

In an example, the control node may determine a quality level to which a link belongs based on a preset first quality threshold and a second quality threshold. The second quality threshold is less than the first quality threshold.

Exemplarily, in a case where a link quality of a target access node is greater than a first quality threshold, a link between the target access node and the client may be classified into the first link level. In a case where the link quality of the target access node is less than or equal to the first quality threshold, and is greater than or equal to the second quality threshold, the link between the target access node and the client may be classified into the second link level. In a case where the link quality of the target access node is less than the second quality threshold, the link between the target access node and the client may be classified into the third link level.

In some embodiments, the link quality of the target access node may be determined based on the service type of the client. Exemplarily, the control node may determine a main quantized parameter according to a service requirement of the service type of the client, and determine a quantized score of the link between the target access node and the client based on the main quantized parameter. The smaller the quantized score is, the higher the link quality between the target access node and the client is.

Exemplarily, the control node may determine the quality level to which the link belongs based on a preset quantized score interval. In a case where the quantized score of the target access node is in a first quantized score interval, the link between the target access node and the client may be classified into the first link level. In a case where the quantized score of the target access node is in a second quantized score interval, the link between the target access node and the client may be classified into the second link level. In a case where the quantized score of the target access node is in a third quantized score interval, the link between the target access node and the client may be classified into the third link level. A value indicated by the first quantized score interval is smaller than a value indicated by the second quantized score interval, and the value indicated by the second quantized score interval is smaller than a value indicated by the third quantized score interval.

Taking a cloud computer service as an example, this service has a very low tolerance for latency, and may tolerate minor packet loss. Thus, latency may be selected as a main parameter for quantization, to obtain a quantized score, where the quantized score may be set to a value in the interval of 0-1. The first quantized score interval is [0, 0.3], the second quantized score interval is (0.3, 0.6], and the third quantized score interval is (0.6, 1].

In some embodiments, the control node may receive a link detection request sent from the client, and send link qualities of the at least two target access nodes to the client based on the link detection request. The link detection request is used to request the link qualities of the at least two target access nodes. In this way, the client selects a suitable transmission strategy as the target transmission strategy based on the acquired link qualities of the target access nodes, and performs data transmission with the audio and video system based on the target transmission strategy.

In some embodiments, the target transmission strategy includes a first transmission strategy, a second transmission strategy, or a third transmission strategy.

As shown in FIG. 6, the first transmission strategy is used to indicate the client to transmit service data based on one link. The second transmission strategy is used to indicate the client to transmit service data based on at least two links, where pieces of service data transmitted on respective links are same. In some embodiments, a link indicated by the second transmission strategy may further be used to transmit redundant data. The third transmission strategy is used to indicate the client to transmit all pieces of service data based on one link, and transmit key service data among the all pieces of the service data based on another link. In some embodiments, a link indicated by the third transmission strategy may further be used to transmit the redundant data.

In some embodiments, the target transmission strategy may be determined based on the link qualities of the at least two target access nodes. In some embodiments, there are the following situations:
Situation 1: in a case where a link quality of at least one target access node is greater than a first quality threshold, the target transmission strategy is the first transmission strategy.

It should be noted that the first transmission strategy may also be referred to as a single-link transmission solution, which is suitable for situations where a link quality is good, where all pieces of service data are able to be transmitted through one link. Taking there being two determined target access nodes as an example, if a quality level of a link of two links of the two access nodes is the first link level, transmission is performed through the link. Alternatively, if quality levels of the two links are the first link level, a link with higher quality is selected for performing transmission.

Situation 2: in a case where link qualities of all target access nodes are less than a second quality threshold, the target transmission strategy is the second transmission strategy.

It should be noted that the second transmission strategy may also be referred to as a dual-link transmission solution. Taking there being two determined target access nodes as an example, if there is a link of two links of the two access nodes with a poor quality level, it means that both of the two links may be in a weak network. All pieces of service data may be duplicated at the client, and the data may be expanded with redundant packets, and then the same service data may be transmitted through these two links.

Situation 3: in a case where link qualities of all target access nodes are less than or equal to the first quality threshold, and a link quality of at least one target access node is greater than or equal to the second quality threshold, the target transmission strategy is the third transmission strategy.

It should be noted that the third transmission strategy may also be referred to as a hybrid link transmission solution, which may transmit all pieces of service data through a relatively good link, and transmit key service data with a smaller data volume (such as a key data frame, an audio packets) through other links with relatively poor quality, and expand data on the respective links by adding redundant packets. Taking there being two determined target access nodes as an example, if link quality levels of the two links of the two access nodes are both good, then a link with a relatively lower quality score is selected to transmit all pieces of service data. If one of the link quality levels of the two links of the two access nodes is good and the other of the link quality levels of the two links of the two access nodes is poor, all pieces of service data are transmitted through the good link, and key service data are transmitted through the link with a weak network (i.e., the link whose quality level is poor).

In some embodiments, the control node may further determine a target access node indicated by the target transmission strategy. It should be understood that, the target access node indicated by the target transmission strategy is the node to be accessed by the client.

In an example, it is taken that the target access node at least includes a first target access node and a second target access node as an example. If the link qualities of the first target access node and the second target access node meet the above-mentioned situation 1, and a link between the first target access node and the client belongs to the first link level, and a link between the second target access node and the client belongs to the second link level, the control node determines that the target access node indicated by the target transmission strategy is the first target access node.

In another example, it is also taken that the target access node at least includes a first target access node and a second target access node as an example. If the link qualities of the first target access node and the second target access node meet the above situation 2, the control node determines that the target access node indicated by the target transmission strategy are the first target access node and the second target access node.

In another example, it is also taken that the target access node at least includes a first target access node and a second target access node as an example. If the link qualities of the first target access node and the second target access node meet the above situation 3, and the link between the first target access node and the client belongs to the second link level, and the link between the second target access node and the client belongs to the third link level, the control node determines that the target access nodes indicated by the target transmission strategy are the first target access node and the second target access node. Furthermore, the first target access node may be used to transmit all pieces of service data, and the second target access node may be used to transmit key service data.

In S104, a target access node indicated by the target transmission strategy is controlled to perform data transmission with the client.

In some embodiments, the client may establish a data channel with a corresponding target access node based on the target transmission policy, and perform data transmission with the target access node.

In one example, in a case where the client is a source client, the client may generate service data, establish a data channel with a corresponding target access node based on the target transmission strategy, and send the service data to the target access node. In another example, in a case where the client is a target client, the client may establish a data channel with the corresponding target access node according to the target transmission strategy, and receive service data sent from the target access node.

Based on the above-mentioned embodiments, on the one hand, according to the distance between the client and the access node of the audio and video system in combination with a link parameter corresponding to the service type and the historical access state of the client, a suitable access node is screened out, so as to more accurately determine the access node and implement precise scheduling of client access by the audio and video system. On the other hand, appropriate transmission and measurement may be selected for service data transmission in combination with the link quality of the target access node. In this way, it is possible to avoid transmitting service data only based on a link with relatively lower quality, thereby improving the reliability of service data transmission.

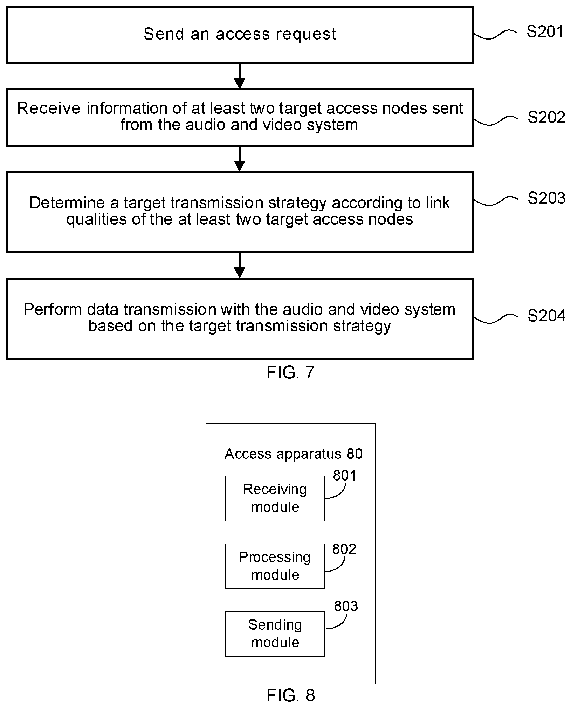

In some embodiments, another access method is provided in the embodiments of the present disclosure, which is applied to a client. As shown in FIG. 7, the method includes the following S201-S204.

In S201, an access request is sent.

The access request is used to request to access an audio and video system, and the access request includes location information and a service type of the client.

In S202, information of at least two target access nodes sent from the audio and video system is received.

Information of a target access node may include inherent data of the target access node, such as one or more of a node IP address, a node identity document, a node hardware parameter (e.g., CPU or memory, etc.), and client access information.

The client may determine the at least two target access nodes according to the information of the at least two target access nodes sent from the audio and video system.

In some embodiments, when the client determines the at least two target access nodes, the client may further send a link detection request to the audio and video system, where the link detection request is used to request link qualities of the at least two target access nodes. Furthermore, the link qualities of at least two target access nodes sent from the audio and video system may also be received.

A link quality of a target access node is used to characterize a quality of a link between the target access node and the client.

In S203, a target transmission strategy is determined according to link qualities of the at least two target access nodes.

A link quality of a target access node is used to characterize a quality of a link between the target access node and the client.

In some embodiments, the target transmission strategy includes a first transmission strategy, a second transmission strategy, or a third transmission strategy.

The first transmission strategy is used to indicate the client to transmit service data based on one link; the second transmission strategy is used to indicate the client to transmit service data based on at least two links, where pieces of service data transmitted on respective links are same; the third transmission strategy is used to indicate the client to transmit all pieces of service data based on one link, and transmit key service data among the all pieces of the service data based on another link.

In S204, data transmission with the audio and video system is performed based on the target transmission strategy.

In some embodiments, in a case where a link quality of at least one target access node is greater than a first quality threshold, the client may determine the first transmission strategy as the target transmission strategy.

In some embodiments, in a case where link qualities of all target access nodes are less than the second quality threshold, the client may determine the second transmission strategy as the target transmission strategy. The second quality threshold is less than the first quality threshold.

In some embodiments, in a case where the link qualities of all target access nodes is less than or equal to the first quality threshold, and a link quality of at least one target access node is greater than the second quality threshold, the target transmission strategy is the third transmission strategy.

In addition, detailed description for S201-S204 may refer to the description for S101-S103 above, which may not be repeated herein.

Based on the above-mentioned embodiments, the client receives the at least two target access nodes, and in combination with the link qualities of the target access nodes, the client may select a suitable data transmission scheme to perform service data transmission with the corresponding target access nodes. In this way, a situation of the unstable service data transmission between the client and the audio and video system caused by the relatively lower link quality of one link may be avoided, thereby improving the reliability of service data transmission.

The foregoing mainly introduces the solutions provided by the present disclosure from the perspective of interaction between various nodes. It can be understood that, in order to implement the above-mentioned functions, the various nodes, such as an apparatus or device, includes corresponding hardware structures and/or software modules for performing the various functions. Those skilled in the art should easily realize that the present disclosure may be implemented in the form of hardware or a combination of hardware and computer software in combination with algorithms and steps described in the embodiments disclosed in the present disclosure. Whether a certain function is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

FIG. 8 is a schematic diagram of a composition of an access apparatus provided by the embodiments of the present disclosure, which is applied to a control node of an audio and video system. As shown in FIG. 8, the access apparatus 80 includes a receiving module 801 and a processing module 802. In some embodiments, the access apparatus 80 further includes a sending module 803.

In some embodiments, the receiving module 801 is configured to receive an access request from a client, where the access request is used to request to access the audio and video system, and the access request includes location information and a service type of the client; the processing module 802 is configured to determine at least two target access nodes from a plurality of access nodes of the audio and video system according to the location information and the service type; the processing module 802 is further configured to send information of the at least two target access nodes to the client, to make the client determine a target transmission strategy according to link qualities of the at least two target access nodes, where a link quality of a target access node is used to characterize a quality of a link between the target access node and the client; the processing module 802 is further configured to control a target access node indicated by the target transmission strategy to perform data transmission with the client.

In some embodiments, the processing module 802 is configured to: determine a plurality of first access nodes from the plurality of access nodes of the audio and video system according to the location information of the client, where a first access node is an access node whose distance from the client is shorter than or equal to a preset distance threshold; determine respective quantized scores of the plurality of first access nodes according to the service type, where a quantized score is used to characterize a reliability of a link between a first access node and a transit node of the audio and video system for transmitting service data of the service type; determine a plurality of second access nodes from the plurality of first access nodes according to the respective quantized scores of the plurality of first access nodes; and determine the at least two target access nodes from the plurality of second access nodes.

In some embodiments, the processing module 802 is configured to: perform averaging calculation on the respective quantized scores of the plurality of first access nodes to obtain an average quantized score; and determine a first access node whose quantized score is less than or equal to the average quantized score as a second access node.

In some embodiments, the processing module 802 is configured to: acquire historical access information of the client to access the audio and video system, where the historical access information includes a historical login success rate and a historical service state parameter of the client to access the audio and video system based on an access node; determine white-list access nodes from the plurality of second access nodes according to the historical access information; and determine the target access nodes from the white-list access nodes.

In some embodiments, the target transmission strategy includes a first transmission strategy, a second transmission strategy or a third transmission strategy; where the first transmission strategy is used to indicate the client to transmit service data based on one link; the second transmission strategy is used to indicate the client to transmit service data based on at least two links, where pieces of service data transmitted on respective links are same; the third transmission strategy is used to indicate the client to transmit all pieces of service data based on one link, and transmit key service data among the all pieces of the service data based on another link.

In some embodiments, in response to that a link quality of at least one target access node is greater than a first quality threshold, the target transmission strategy is the first transmission strategy; in response to that the link qualities of the target access nodes are all less than a second quality threshold, the target transmission strategy is the second transmission strategy, and the second quality threshold is less than the first quality threshold; in response to that the link qualities of the target access nodes are all less than or equal to the first quality threshold, and a link quality of at least one target access node is greater than or equal to the second quality threshold, the target transmission strategy is the third transmission strategy.

In some embodiments, the receiving module 801 is further configured to: receive a link detection request sent from the client, where the link detection request is used to request the link qualities of the at least two target access nodes; the sending module 803 is further configured to send the link qualities of the at least two target access nodes to the client.

It should be noted that, the modules in FIG. 8 may also be referred to as units. For example, the sending module may be referred to as a sending unit. In addition, in the embodiments shown in FIG. 8, names of the modules may not be the names shown in the figure. For example, the sending module may also be referred to as a communication module.

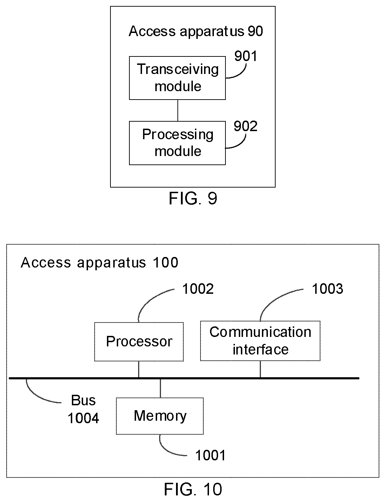

FIG. 9 is a schematic diagram of a composition of another access apparatus provided by the embodiments of the present disclosure, which is applied to client. As shown in FIG. 9, the access apparatus 90 includes a transceiving module 901 and a processing module 902.

In some embodiments, the transceiving module 901 is configured to send an access request, where the access request is used to request to access an audio and video system, and the access request includes location information and a service type of the client. The transceiving module 901 is further configured to receive information of at least two target access nodes sent from the audio and video system. The processing module 902 is configured to determine a target transmission strategy according to link qualities of the at least two target access nodes, where a link quality of a target access node is used to characterize a quality of a link between the target access node and the client. The transceiving module 901 is further configured to perform data transmission with the audio and video system based on the target transmission strategy.

In some embodiments, the target transmission strategy includes a first transmission strategy, a second transmission strategy or a third transmission strategy; where the first transmission strategy is used to indicate the client to transmit service data based on one link; the second transmission strategy is used to indicate the client to transmit service data based on at least two links, where pieces of service data transmitted on respective links are same; the third transmission strategy is used to indicate the client to transmit all pieces of service data based on one link, and transmit key service data among the all pieces of the service data based on another link.

In some embodiments, the processing module 902 is configured to: in response to that a link quality of at least one target access node is greater than a first quality threshold, determine the first transmission strategy as the target transmission strategy; in response to that the link qualities of the target access nodes are all less than a second quality threshold, determine the second transmission strategy as the target transmission strategy, and the second quality threshold is less than the first quality threshold; in response to that the link qualities of the target access nodes are all less than or equal to the first quality threshold, and a link quality of at least one target access node is greater than the second quality threshold, the target transmission strategy is the third transmission strategy.

In some embodiments, the transceiving module 901 is further configured to: send a link detection request to the audio and video system, where the link detection request is used to request the link qualities of the at least two target access nodes; and receive the link qualities of the at least two target access nodes sent from the audio and video system.

If the various units in FIG. 8 or FIG. 9 are implemented in the form of the software functional unit and sold or used as independent products, they may be stored in a computer-readable storage medium. Based on this understanding, the technical solutions of the present disclosure may be essentially, or a part of the technical solutions of the present disclosure that contributes to the related technologies, or all or a portion of the technical solutions of the present disclosure may be, embodied in the form of a software product, and the computer software product may be stored in a storage medium including couples of instructions to enable a computer device (may be a personal computer, a server, a network device, etc.) or a processor to perform all or a portion of steps of the method in the various embodiments of the present disclosure. The storage medium for storing a computer software product includes various types of medium capable of storing program codes, such as a USB flash drive, a mobile disk, a read-only memory (ROM), a random-access memory (RAM), a magnetic disk, or an optical disk.

In a case where the functions of the above-mentioned integrated modules are implemented by adopting the form of hardware, there is provided a structural schematic diagram of an access apparatus in the embodiments of the present disclosure, the access apparatus may be the above-mentioned access apparatus 80 or access apparatus 90. As shown in FIG. 10, the access apparatus 100 includes: a memory 1001, a processor 1002, a communication interface 1003, and a bus 1004.

The memory 1001 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 1002 may implement or perform various exemplary logical blocks, modules and circuits described in combination with the present disclosure. The processor 1002 may be a central processor, a general-purpose processor, a digital signal processor, an application specific integrated circuit, a field programmable gate array, or other programmable logic component, a transistor logic component, a hardware assembly, or any combination thereof. The processor 1002 may implement or execute various illustrative logical blocks, modules and circuits described in conjunction with the disclosed contents of the present disclosure. The processor 1002 may also be a combination that implements computing functions, for example, the processor 1002 includes a combination of one or more microprocessors, a combination of a DSP (digital signal processor) and a microprocessor, or the like.

The communication interface 1003 is configured to connect to other devices through a communication network. The communication network may be the Ethernet, a wireless access network, a wireless local area networks (WLAN), or the like.

In some embodiments, the memory 1001 may exist independently from the processor 1002, and the memory 1001 may be connected to the processor 1002 through the bus 1004 for storing instructions or program codes. When the processor 1002 invokes and executes instructions or program codes stored in the memory 1001, the processor 1002 may implement the information processing mode determination method provided in the embodiments of the present disclosure.

In some embodiments, the memory 1001 may be integrated with the processor 1002.

The bus 1004 may be an extended industry standard architecture (EISA) bus, or the like. The bus 1004 may be classified as an address bus, a data bus, a control bus, or the like. For ease of representation, only one thick solid line is used in FIG. 10 for representing the bus 1004, but it does not indicate that there is only one bus or one type of bus.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the device or apparatus may be divided into different functional modules to complete all or part of the functions described above.

A computer-readable storage medium is further provided in the embodiments of the present disclosure. All or part of the processes in the above method embodiments may be implemented by relevant hardware instructed by computer instructions. The program may be stored in the above-mentioned computer-readable storage medium, and when executed, the program may include the processes as described in the above method embodiments. The computer-readable storage medium may be an internal storage unit of a device or an apparatus in any one of the aforementioned embodiments, such as a hard disk or a memory of a computer device. The above-mentioned computer-readable storage medium may also be an external storage device of the above-mentioned device or apparatus, such as a plug-in hard disk, a smart media card (SMC), a secure digital (SD) card, a flash card, etc., equipped on the above-mentioned device or apparatus. Furthermore, the above-mentioned computer-readable storage medium may include both an internal storage unit and an external storage device of the above-mentioned device or apparatus. The above-mentioned computer-readable storage medium is configured to store the above-mentioned computer programs and other programs and data required by the above-mentioned device or apparatus. The above-mentioned computer-readable storage medium may further be configured to temporarily store data that has been output or is to be output. The above-mentioned computer-readable storage medium may include a non-transitory computer-readable storage medium.

A computer program product is further provided in the embodiments of the present disclosure. The computer program product includes computer program that, when is run on a computer, enables the computer to execute any one of the information processing mode determination method provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, "comprise/comprises/comprising" does not exclude other components or steps, and "a/an" or "one" does not exclude a number of a plurality. A single processor or other units may implement couples of functions listed in the claims. Some measures are recorded in different dependent claims, but this does not mean that these measures cannot be combined to produce good results.

Although the present disclosure is described in conjunction with specific features and embodiments thereof, obviously, various modifications and combinations can be made thereto without departing from the spirit and scope of the present disclosure. Accordingly, the specification and accompanying drawings herein are merely exemplary illustration of the present disclosure defined by the claims and are deemed to cover any and all modifications, variations, combinations or equivalents within the scope of the present disclosure. Obviously, those skilled in the art can make various changes and modifications to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

## Claims

1. An access method, applied to a control node of an audio and video system, **characterized by** the method comprising:
receiving an access request from a client, wherein the access request is used to request to access the audio and video system, and the access request includes location information and a service type of the client;
determining at least two target access nodes from a plurality of access nodes of the audio and video system according to the location information and the service type;
sending information of the at least two target access nodes to the client, so as to make the client determine a target transmission strategy according to link qualities of the at least two target access nodes, wherein a link quality of a target access node is used to characterize a quality of a link between the target access node and the client; and
controlling a target access node indicated by the target transmission strategy to perform data transmission with the client.

2. The method according to claim 1, wherein determining the at least two target access nodes from the plurality of access nodes of the audio and video system according to the location information and the service type comprises:
determining a plurality of first access nodes from the plurality of access nodes of the audio and video system according to the location information of the client, wherein a first access node is an access node whose distance from the client is shorter than or equal to a preset distance threshold;
determining respective quantized scores of the plurality of first access nodes according to the service type, wherein a quantized score is used to characterize a reliability of a link between the first access node and a transit node of the audio and video system for transmitting service data of the service type;
determining a plurality of second access nodes from the plurality of first access nodes according to the respective quantized scores of the plurality of first access nodes; and
determining the at least two target access nodes from the plurality of second access nodes.

3. The method according to claim 2, wherein determining the plurality of second access nodes from the plurality of first access nodes according to the respective quantized scores of the plurality of first access nodes comprises:
performing averaging calculation on the respective quantized scores of the plurality of first access nodes to obtain an average quantized score; and
determining first access nodes whose quantized score is less than or equal to the average quantized score as the second access nodes.

4. The method according to claim 2 or 3, wherein determining the at least two target access nodes from the plurality of second access nodes comprises:
acquiring historical access information of the client to access the audio and video system, wherein the historical access information includes a historical login success rate and a historical service state parameter of the client to access the audio and video system based on an access node;
determining white-list access nodes from the plurality of second access nodes according to the historical access information; and
determining the at least two target access nodes from the white-list access nodes.

5. The method according to claim 1, wherein the target transmission strategy comprises a first transmission strategy, a second transmission strategy or a third transmission strategy;
wherein the first transmission strategy is used to indicate the client to transmit service data based on one link; the second transmission strategy is used to indicate the client to transmit service data based on at least two links, where pieces of service data transmitted on respective links are same; the third transmission strategy is used to indicate the client to transmit all pieces of service data based on one link, and transmit key service data among the all pieces of the service data based on another link.

6. The method according to claim 5, wherein
in response to that a link quality of at least one target access node of the at least two target access nodes is greater than a first quality threshold, the target transmission strategy is the first transmission strategy;
in response to that the link qualities of the at least two target access nodes are all less than a second quality threshold, the target transmission strategy is the second transmission strategy, wherein the second quality threshold is less than the first quality threshold;
in response to that the link qualities of the at least two target access nodes are all less than or equal to the first quality threshold, and a link quality of at least one target access node of the at least two target access nodes is greater than or equal to the second quality threshold, the target transmission strategy is the third transmission strategy.

7. The method according to claim 1, further comprising:
receiving a link detection request sent from the client, wherein the link detection request is used to request the link qualities of the at least two target access nodes;
sending the link qualities of the at least two target access nodes to the client.

8. An access method, applied to a client, **characterized by** the method comprising:
sending an access request, wherein the access request is used to request to access an audio and video system, and the access request includes location information and a service type of the client;
receiving information of at least two target access nodes sent from the audio and video system;
determining a target transmission strategy according to link qualities of the at least two target access nodes, wherein a link quality of a target access node is used to characterize a quality of a link between the target access node and the client; and
performing data transmission with the audio and video system based on the target transmission strategy.

9. The method according to claim 8, wherein the target transmission strategy comprises a first transmission strategy, a second transmission strategy or a third transmission strategy;
wherein the first transmission strategy is used to indicate the client to transmit service data based on one link; the second transmission strategy is used to indicate the client to transmit service data based on at least two links, where pieces of service data transmitted on respective links are same; the third transmission strategy is used to indicate the client to transmit all pieces of service data based on one link, and transmit key service data among the all pieces of the service data based on another link.

10. The method according to claim 9, wherein determining the target transmission strategy according to the link qualities of the at least two target access nodes comprises:
in response to that a link quality of at least one target access node of the at least two target access nodes is greater than a first quality threshold, determining the first transmission strategy as the target transmission strategy;
in response to that the link qualities of the at least two target access nodes are all less than a second quality threshold, determining the second transmission strategy as the target transmission strategy, wherein the second quality threshold is less than the first quality threshold;
in response to that the link qualities of the at least two target access nodes are all less than or equal to the first quality threshold, and a link quality of at least one target access node of the at least two target access nodes is greater than the second quality threshold, the target transmission strategy is the third transmission strategy.

11. The method according to any one of claims 8 to 10, wherein before determining the target transmission strategy according to the link qualities of the at least two target access nodes, the method further comprises:
sending a link detection request to the audio and video system, wherein the link detection request is used to request the link qualities of the at least two target access nodes; and
receiving the link qualities of the at least two target access nodes sent from the audio and video system.

12. A communication apparatus, **characterized by** comprising: a memory and a processor, wherein the memory is coupled to the processor, the memory is configured to store instructions executable for the processor, and the processor is configured, upon the instructions being executed, to perform the method according to any one of claims 1 to 11.

13. A computer-readable storage medium, **characterized in that** the computer-readable storage medium has stored computer instructions thereon, in response that the computer instructions are executed on a communication apparatus, the communication apparatus is enabled to perform the method according to any one claims 1 to 11.
